# EUROPEAN PATENT APPLICATION

(11) **EP 4 635 597 A1**
(43) Date of publication of application: **22.10.2025**
(21) Application number: 24170853.6
(22) Date of filing: 17.04.2024
(51) Int. Cl.: B01D 45/04, B01D 46/00, B01D 50/20, B01D 53/04, B01D 46/58

(54) **FILTER SYSTEM FOR REDUCTION OF AIRBORNE PARTICLES FOR USE IN DIRECT AIR CARBON CAPTURE**

(71) Applicant: Siemens Energy Global GmbH & Co. KG, 81739 München (DE)
(72) Inventor: Nilsson, Linnea, 582 46 Linköping (SE); Jonsson, David, 61630 Åby (SE); Svensson, Oscar, 582 55 Linköping (SE); Hjalmarsson, Christer, 61291 Finspong (SE); Östemar, Martin, 61246 Finspång (SE); Nogenmyr, Karl-Johan, 58561 Linghem (SE)

(57) **Abstract**

A filter system (100) for use with an air flow through a DAC Unit including an enclosed structure (112) configure to include a plurality of elevated inlets (104) and at least one exhaust (114), the enclosed structured (112) defined by, a base (108), a plurality of outer wall sections (102), an internal support structure (107), and a roof section (103), an internal enclosure (202) within the enclosed structure (112) defined by a filter bed (302), a plurality of internal barrier walls (106), the roof section (103) and the at least one exhaust (114), an entrapment passage (310) within the enclosed structure (112), the entrapment passage (310) defined by a first gap (312) between the plurality of outer wall sections (102), the plurality of internal barrier walls (106), and a second gap between the base (108) and the filter bed (302), at least one fan (101) configured to circulate the air flow through the enclosed structure (112).

## Description

### BACKGROUND

Direct air capture (DAC) is a process of capturing carbon dioxide (CO2) directly from an air stream. In a plant for direct air capture, steam can be used for releasing CO2 from a sorbent. This process has a two-fold purpose: on the one hand it provides the necessary heat for the chemical process of releasing CO2, and on the other hand it lowers the partial pressure of the released CO2, speeding up the process even further.

WO 2023/144018 A1 discloses the use of a solid sorbent to capture and remove CO2 from an air stream upon contact. During an adsorption phase, air is moved around the sorbent to provide the carbon dioxide contained in the air to the sorbent so that it can be adsorbed. During a desorption phase, the sorbent with the adsorbed carbon dioxide needs to be enclosed in a contactor, so that the released carbon dioxide can be captured. To desorb the carbon dioxide, the temperature is raised and the partial pressure of the CO2 is lowered. The latter is done by purging with steam and/or lowering the absolute pressure in the sorbent contactor, wherein the steam is used for both purging and heating of the sorbent.

The concentration of CO₂ in ambient air is currently around 0.04% all over the world. This general concentration of CO₂ in ambient air presents the hypothetical possibility of placing DAC units anywhere on the planet and achieve the same amount of captured CO₂. However, the content of other airborne substances in ambient air can differ significantly depending on the local environment of a given location. According to ISO 16890-1 rural environments generally have ambient air with a higher concentration of large particles while urban environments will generally have a higher concentration of smaller particles (< 5 microns). The air content is also highly dependent on geographical location, and the seasonal weather of a particular location. API616, a standard developed for gas turbines, mentions a number of different climate types and suggest different filtration solutions should be used for the different climates.

Appropriate air filtration is a universal challenge for any application that ingest ambient air, such as gas turbine applications. Air filtration is also a challenge for DAC but with the added complexity that large scale implementations are relatively new and there are other variables in the DAC process that can be sensitive to ingestible particles/fluids/gases depending on the sorbent utilized in a given DAC system. Depending on the configuration of a DAC system certain substances can increase the rate at which the sorbent degrades and that will in turn increase the OPEX costs of the entire DAC unit since the sorbents replacement rate has a significant impact on operating costs of the DAC unit. If any potentially service life limiting substances are identified during the development of the DAC unit, it would be possible to take necessary measures and add filtration in the unit to prevent or limit the amount that is able to reach the sorbent.

The implementation of DAC units in environments with substantial concentrations of airborne particles will require some level of filtration to prevent gradual clogging of the system, as well as any sorbent specific sensitivities that need to be addressed by filtration or otherwise. One form of sorbent is solid sorbent which is generally produced in granular form, which requires a mesh or other air permeable solution to keep the sorbent in place inside a sorbent filter within the contactors of the DAC unit while air is circulated around the sorbent. The sorbent filter may contain a mesh which can work as a coarse filter itself if no other filtration is done at earlier points in the air stream inside the DAC unit. Clogging or blocking of the sorbent filters, such as particles blocking a mesh enclosed sorbent, will result in increased pressure drop, increased load/power consumption by the circulation fans and, most importantly, it could eventually result in a reduction in the amount of captured CO₂ by the circulation equipment of the DAC unit since the air stream being sucked into the system is reduced or does not reach the sorbent.

Climate differences, risk of rapid sorbent degradation, and a strong focus on energy efficiency as well as cost effectiveness exemplifies the importance of having a sufficient air filtration solution in every DAC unit. Furthermore, it is unlikely that one sole air filtration solution is sufficient to have a cost-effective and energy-efficient DAC unit that can be placed anywhere in the world. Instead, an adaptable design for different climates and local conditions is desirable.

Connected to the above-mentioned points, the possibility to service and/or exchange air inlet components as well as other components installed in the air stream becomes important. Weather conditions can play a big role in when service is possible and how it can be conducted in a safe way.

### BRIEF SUMMARY

It is therefore a goal of the present invention to provide a filter for use in a direct air carbon capture unit or other process requiring an air flow stream, which overcomes the above-mentioned disadvantage(s). In particular, a filter shall be provided, in which a cost-effective solution can be implemented in any environment, particularly variations in local air borne particle concentrations.

In an embodiment, a filter or filter system for use with an air flow includes an enclosed structure configure to include a plurality of elevated inlets and at least one exhaust, the enclosed structured defined by, a base, a plurality of outer wall sections, an internal support structure, and a roof section, an internal enclosure within the enclosed structure defined by a filter bed, a plurality of internal barrier walls, the roof section and the at least one exhaust, an entrapment passage within the enclosed structure, the entrapment passage defined by a first gap between the plurality of outer wall sections, the plurality of internal barrier walls, and a second gap between the base and the filter bed, at least one fan configured to circulate the air flow through the enclosed structure, a first filtration stage includes the entrapment passage, a second filtration stage includes the filter bed, where the first filtration stage is configured to redirect the air flow and separate an amount of air borne particles from the air flow prior to the second filtration stage by causing the heavier air borne particles to fall to the base at the changes of direction including the final turn that requires an upward flow into the filter bed.

In an embodiment, the filter is advantageously used as a multi-stage filter in a DAC unit. The first stage of filtration is accomplished by elevated air inlets and an entrapment passage which redirects the air flow through the enclosed structure. The air inlets of the enclosed structure are advantageously located at an elevation of at least 6 meters above the ground level or the base of the enclosed structure. The entrapment passage advantageously redirects the air flow by causing the air flow to make at least three consecutive turns, of at least 90 degrees each, as the air flow is directed from the air inlets and through a first and second gap of the entrapment passage. In one embodiment the air flow enters the elevated air inlets and impinges on the internal barrier wall, is pulled down by the circulation fans until it reaches at least the bottom of the filter bed, then it is pulled toward the center line of the filter bed and is turned upward and through one of the contactors, once through the contactor the air flow exits the enclosed structure of the filter system via the exhaust. In one embodiment the circulation fan or fans are advantageously located within the exhaust of the enclosed structure. In one embodiment, the filter bed advantageously includes a flow shield configured to prevent the air flow from bypassing the contactors.

In one embodiment, the enclosed structure includes at least one drain located at a low point within the enclosed structure. The drain can advantageously be included within the base of the enclosed structure. In one embodiment the first gap and second gap of the entrapment passage are sized to allow for personnel to service the internal components of the enclosed structure, such as the contactors, sorbent filter, mesh, and piping. In one embodiment the first gap is advantageously sized between 1-3 meters, with a 1.7 m first gap being particularly advantageous. In one embodiment the second gap is advantageously sized between 2.5-5 meters, with a 3 m second gap being particularly advantageous. In one embodiment the entrapment passage can be cleaned directly by personnel or can be cleaned by water wash nozzles located within the entrapment passage. Regardless of the water or washing sources, particles that have collected within the entrapment passaged during operation would be washed out of the enclosed structure via the drain(s).

In one embodiment, the filter is used in a DAC unit where the direction of the air flow is opposite of the direction of a steam flow used during a desorption cycle. The contactors, sorbent filters, and meshes of the filter bed are advantageously cleaned or back washed by the condensation of the steam flow as the condensed steam or water will follow gravity downward and out of the drain(s).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an elevated view of a direct air carbon capture unit in accordance with one embodiment of the invention.
FIG. 2 illustrates an elevated view of the direct air carbon capture unit of FIG. 1 with an internal view.
FIG. 3 illustrates a view in cross section of the direct air capture unit of FIG. 1 through cut plane A-A.
FIG. 4 illustrates view in cross section of the direct air capture unit of FIG. 1 and FIG. 2 through cut plane B-B.

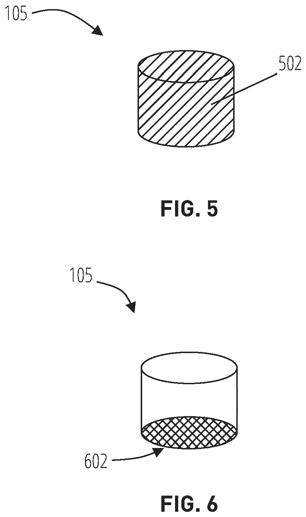

FIG. 5 illustrates an internal view of a sorbent filter within a contactor according to one embodiment.
FIG. 6 illustrates an internal view of a mesh of a sorbent filter according to one embodiment.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

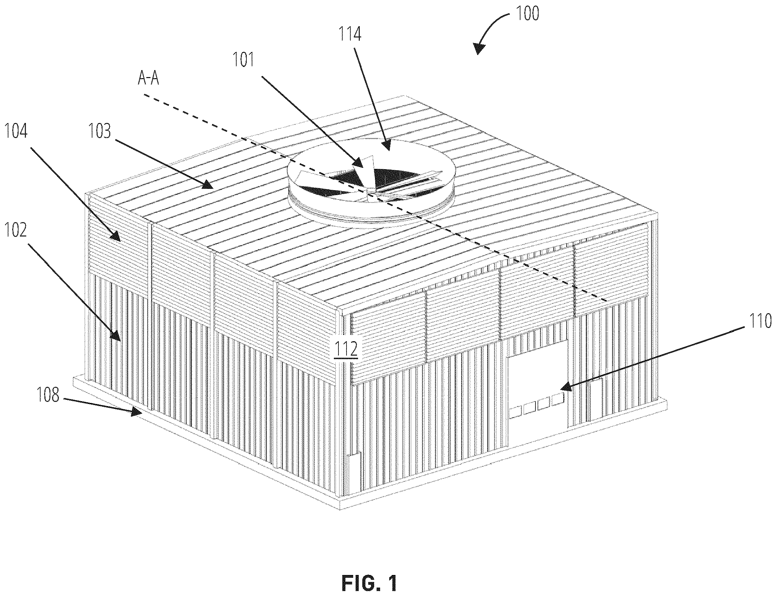

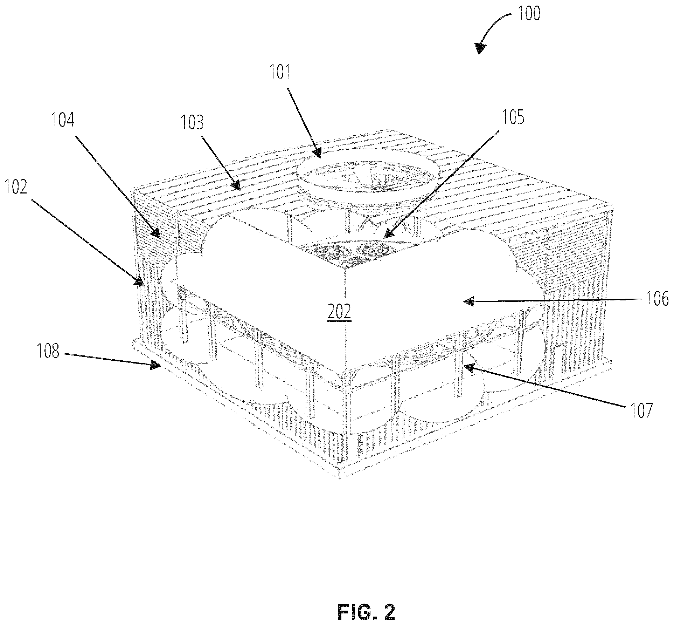

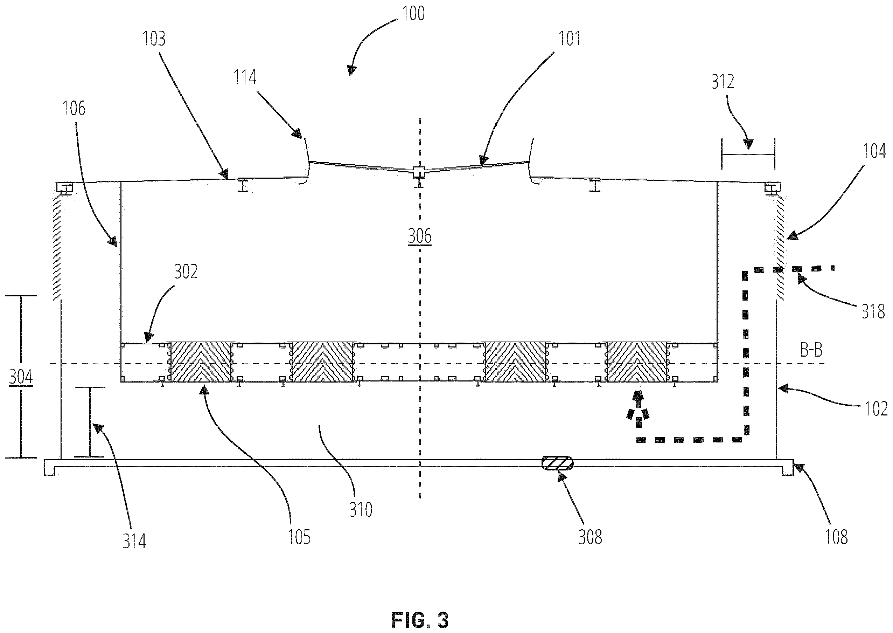

FIG. 1 and FIG. 2 illustrate a filter system 100 which in this embodiment is used as part of a direct air carbon capture unit or DAC unit, in accordance with one embodiment of the invention. A person skilled in the art will know that the filter system 100 can be used with a process that requires a constant air flow, such as a gas turbine inlet. The filter system 100 consists of three main groups of components. The first group is one or several circulation fans 101 and the related equipment required to pull air in through the air inlets 104 and through the filter system 100 before releasing it back to the ambient environment. In this embodiment the circulation fan 101 is aligned with a center line 306 and the roof sections 103 of the filter system 100, which allows for the air flow to exit the filter system 100 in the positive z-direction, out the top of the filter system 100 via the exhaust 114, See FIG. 3. The second group of components is the exterior structure of the enclosed structure 112 of the filter system 100, including the base 108, the outer wall sections 102 and the roof sections 103 which create a protective enclosure and enables a configuration of the filter system 100 which includes an air inlet 104 and air outlet or exhaust 114, in this embodiment the location of the circulation fan 101, as well as the structures necessary to support the extraction fan or circulation fan 101 and any inlet louvers and/or additional air filtration that can be needed depending on the intended application.

The third group of components is the internal enclosure 202 which includes the internal support structure 107, see FIG. 2. The internal support structure 107 allows for the elevation of the internal enclosure 202. In this embodiment the elevated internal enclosure 202 is defined by the internal support structure 107, the filter bed 302, the internal barrier walls 106, the roof sections 103 and the exhaust 114 and or circulation fan 101. The internal support structure 107 allows for the elevation of the filter bed 302 which can be any type of known filtration method, in this embodiment a number of contactors 105, each of which contains a sorbent filter 502. This configuration allows for one of the key aspects of the invention, namely guiding or rerouting the air flow to change direction several times prior to entering the contactors 105 from below. This is achieved by the entrapment passage 310 defined by the gaps between the internal enclosure 202 and the exterior boundaries of the enclosed structure 112 of the filter system 100, see FIG. 3. The internal barrier walls 106 that are mounted to the internal support structure 107 and extend in the z or vertical direction from the filter bed 302 to the roof section 103, see FIG. 1 and FIG. 3. The space between the interior sides of the outer wall sections 102 and the interior barrier walls 106 is first gap 312. The first gap 312 can have a horizontal width of between 1 m and 3 m. In this embodiment the first gap 312 is 1.7m. The space in between the filter bed 302 and the base 108 defines the second gap 314. The second gap 314 is the elevation in the z or vertical direction that the filter bed 302 is raised above the base 108. The second gap 314 can have a vertical height of between 2.5 m and 5 m. In this embodiment the second gap 314 is 3 m. The filter bed 302 may be sealed at the top of the second gap 314 with a flow shield 402 which prevents the air flow from bypassing the contactors 105. Alternatively, the filter bed 302 can be sealed in the areas that do not include contactors 105, the flow shield 402 can be at any location within the filter bed 302, such as cut plane B-B or the top or bottom of the filter bed 302, as the air flow will be forced to flow through the contactors 105 which have openings at the bottom of the filter bed 302 or the top of the second gap 314.

The external air flow or atmospheric air enters the filter system 100 via the air inlets 104 which are at an elevation 304, in this embodiment the air flow enters the air inlets 104 in the horizontal direction and impacts the internal barrier walls 106. The air stream then makes a 90 degree turn in the negative z-direction (downward) until it reaches the bottom of the barrier walls 106 or the bottom of the filter bed 302, at which point it makes another 90 degree turn and flows in the horizontal direction towards the center line 306 of the filter system 100. A portion of the air flow may continue in the downward direction until it impacts the base 108 and then is pulled into one of the contactors 105. As the air stream flows toward the center line 306 a portion of the air flow will be turned 90 degrees in the upward direction as the air flow is pulled through each of the contactors 105 and the sorbent filters 502 within. The air flow is required to make at least three 90 degree turns prior to entering the contactors 105, this will have the effect of separating the heavier and or larger particles from the air flow as they are deposited on the interior of the base 108 within the filter system 100. An exemplary flow path 318 can be seen in FIG. 3 where three consecutive 90 degree turns are required with the final turn requiring the air flow to travel in the upward or in the positive z direction into a contactor 105.

The internal barrier walls 106 and elevated floor of the filter bed 302 prevent the majority of air flow from passing through the enclosed structure 112 of the filter system 100 without passing through the contactors 105 which is a crucial feature of this embodiment, as this directly relates to the amount of CO₂ that can be captured per kWh needed for operation of the DAC unit. Having a hundred percent of the air flow going through the filter bed 302 and contactors 105 would be ideal but an air-tight construction of the internal enclosure created by the barrier walls 106, filter bed 302, roof sections 103 and circulation fan 101 or exhaust 114 is not economically viable in relation to the additional CO₂ that could be captured with an airtight internal enclosure. The barrier walls 106 abut the roof sections 103 and create an imperfect seal which prevents the majority of the air flow from bypassing the filter bed 302. In other embodiments the intersection of the barrier walls 106 and roof sections 103 can be seal with any known method, such as sealants, caulks, fitted panels with gaskets or O-rings, etc.

The invention and the embodiment seen in FIG. 1 through FIG. 4 has several key features that makes it suitable for operation in environments with ambient air that has a substantial concentration of heavier or large air borne particles. The air inlets 104 are intentionally placed at an elevation 304 that is several meters, 6m or more, above the ground level or the base 108 of the filter system 100. The elevation 304 will reduce the number of heavier particles that are initially introduced into the filter system 100 via the air inlets 104 as heavier particles will fall to the ground faster and therefore be less concentrated at or above the elevation 304. Additionally, locating the air inlets 104 at the elevation 304 will reduce the volume of heavier elements such as dust, sand, and leaves laying on the ground in the vicinity of the exterior base 108 of the enclosed structure 112 from being sucked into the filter system 100, which could potentially clog the system or increase the frequency of service intervals. Lastly, the elevation 304 enables the filter system 100 to be placed in environments that experience snow fall throughout the entire year, or parts of the year since snow is unlikely to pile up and block the air inlet 104 which are located at an elevation 304 of 6 meters or greater above ground level. The elevation 304 of the air inlets 104 will also reduce the amount of snow that is carried by wind, regardless of the strength or direction of the wind. Inlets at ground level are more susceptible to snow ingestion due to pile up and or wind displacement, either of which could be ingested by the filter system 100. Once ingested the snow would eventually melt and the now water could be potentially ingested into the contactors 105 and the sorbent filters within. Direct contact with water can decrease the service life of the sorbent media, depending on the sorbent used the exposure to water at ambient temperature and pressures can be particularly detrimental to the sorbent.

As seen in FIG. 3, after the air flow enters the filter system 100 via the air inlets 104, it is guided to flow downwards and then make a turn upwards before entering the contactors 105, where the CO₂ is adsorbed. These changes in direction, together with a low air flow rate allow the heavier and or larger air borne particles within the ambient air flow that has entered the filter system 100 via the air inlets 104 to fall or settle on the internal portion of the base 108. The flow rate of the air flow is determined by the geometry of the internal passages of the filter system 100 and the rating of the circulation fan 101 or circulation fans 101. In one embodiment the circulation fan 101 has a rated flow rate of 370 m³/s. In other embodiments the circulation fan 101 has a rated flow rate of between 200 and 400 m³/s. The contactors 105 each enclose a sorbent filter 502, the sorbent filters 502 can include an outer mesh 602 material designed to trap air borne particles. The spacing or grid of the mesh 602 can be customized to the application but in this embodiment the mesh 602 has a spacing of between 0.05 mm and 1 mm, which is considered to be a fine mesh. Any particles larger than the mesh 602 will be trapped by the mesh 602 and not have the ability to pass through the sorbent filters 502. Instead, they would end up stuck to the bottom of the contactors 105 as the mesh 602 acts like a pre-filter for each of the individual sorbent filters 502. An amount of the particles captured by the mesh 602 of the sorbent filters 502 will fall to the base 108 when the air flow is stopped, such as during the desorption cycle of the DAC unit. The elevated air inlet 104, the intentional direction changes of the air flow, together with the fact that air is entering the contactors 105 from below is a first stage of filtration which reduces the risk of clogged sorbent filters 502.

In one embodiment, the direction of the air flow is opposite of the direction of the steam flow used during the desorption cycle of the DAC unit that utilizes a filter system 100. This reversal will result in a cleaning cycle of the meshes 602 used by the sorbent filters 502 in the contactors 105 or any pre-filtration that is part of the filter bed 302. This will help to keep the contactor-connected steam condensate piping clean from extensive debris since any particles inside the contactors 105 or on the meshes 602 will follow the condense water out of the contactors 105 during the desorption phase. Similarly, the base 108 of the filter system 100 can be fitted with a drain 308 or several drains 308 at low points to clean out the particles that have accumulated inside of the filter system 100 during the absorption cycle and washed out with the condensation water that drains from the contactors 105 or other water source.

In one embodiment the air inlets 104 are positioned all around the circumference of the filter system 100, but it is feasible to have air inlets 104 on fewer sides or panels of the outer barrier walls 106 of the filter system 100 and still retaining the above-mentioned features and the benefits related to them. A multiple-sided air inlet 104 configuration will however allow for additional value-adding features such as the smallest unit size related to a certain pressure drop in the air flow. The pressure drop in the system is directly related to the size of the area in which the air flow enters the filter system 100, so being able to distribute this inlet area on multiple locations around the circumference of the filter system 100 will keep the DAC unit size to a minimum. Other embodiments can adapt the inlet size depending on what type of air filtration might be required on different locations as well as the overall flow rate that is supported by a particular filter system 100 or DAC unit design. Alternatively, the air inlets 104 can be added or subtracted to tune the pressure drop of the filter system 100. In one embodiment the pressure drop between the air inlet 104 and the exit of the circulation fan 101 is 200 Pa. The pressure drop can be in a range between 100 Pa and 300 Pa.

Serviceability of the filter system 100 and DAC unit is improved by the entrapment passage 310 as the first gap 312 and second gap 314 can be several meters and allow for personnel to access the internal portions of the filter system 100. Personnel can enter the filter system 100 and the entrapment passage 310 from the access panel 110 abutting the outer wall sections 102, see FIG. 1. One service or maintenance activity that can be carried out within the entrapment passage 310 is removal of entrapped particles, cleaning of the base 108 and other surfaces. Cleaning can be the manual hosing down of the base 108 or the activation of a sprinkler or other known method of spraying water and washing the effluent out the drain 308.

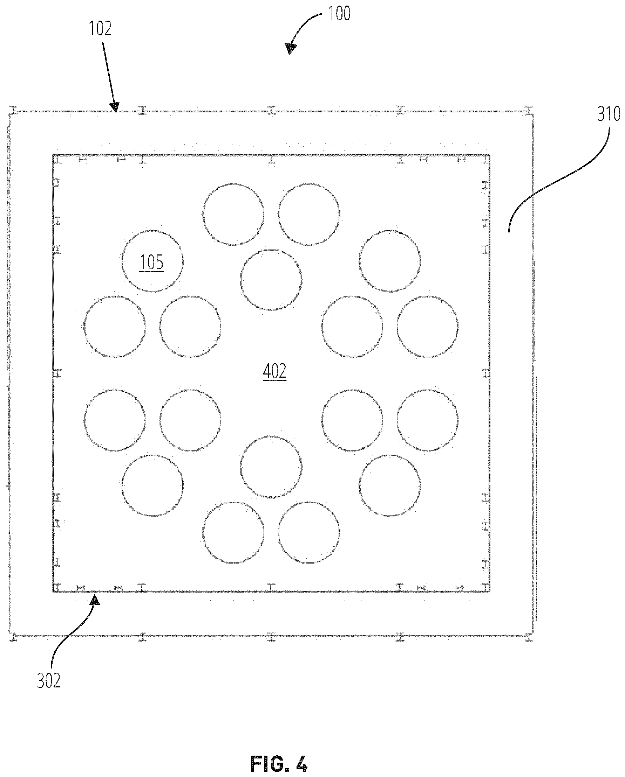

A view of a cross section of the filter system 100 of FIG. 1 and FIG. 3 can be seen in FIG. 4, the cross section is parallel to the ground or base 108 and goes through the filter bed 302 at cut plane B-B. The filter bed 302 is configured to hold a number of contactors 105 and is sealed against air flow by a flow shield 402 in the areas that are not occupied by contactors 105. In this embodiment, there are a total of 18 contactors 105 but other configurations are possible depending on the requirements and capabilities of a particular filter system 100 or DAC unit.

The contactors 105 each contain a sorbent filter 502. The sorbent filter 502 can be any known configuration of sorbent, including but not limited to solid sorbent, liquid sorbent, amine, coating, etc. In one embodiment the sorbent filter 502 is made up of polymer beads that are coated with an amine sorbent. The sorbent filter 502 can include a structure that holds the sorbent in place but is also permeable to the air flow. The sorbent filter 502 can be sized to allow particles of a particular size to pass through without issue and be clogged by particles of a size larger than a threshold size.

As discussed above, each contactor 105 can include a mesh 602 that is located at or near the bottom of the contactor 105 which acts as a pre-filter for the sorbent filter 502. The meshes 602 can be located at any location within the contactor 105 that allows for the pre-filtration of the air flow prior to entering the sorbent filter 502.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A filter system (100) for use with an air flow comprising:
an enclosed structure (112) configured to include a plurality of elevated inlets (104) and at least one exhaust (114),
the enclosed structured defined by, a base (108), a plurality of outer wall sections (102), an internal support structure (107), and a roof section (103),
an internal enclosure (202) within the enclosed structure (112) defined by a filter bed (302), a plurality of internal barrier walls (106), the roof section (103) and the at least one exhaust (114),
an entrapment passage (310) within the enclosed structure (112), the entrapment passage (310) defined by a first gap (312) between the plurality of outer wall sections (102), the plurality of internal barrier walls (106); and a second gap (314) between the base (108) and the filter bed (302),
at least one fan (101) configured to circulate the air flow through the enclosed structure (112),
a first filtration stage comprising the entrapment passage (310),
a second filtration stage comprising the filter bed (302),
wherein the first filtration stage is configured to redirect the air flow and separate an amount of air borne particles from the air flow prior to the second filtration stage.

2. The filter system (100) according to claim 1 wherein the second filtration stage is a direct air carbon capture unit and the filter bed (302) further comprises a plurality of sorbent filters (502) within a plurality of contactors (105).

3. The filter system (100) according to claim 1 or claim 2 wherein the internal enclosure (202) is nested within the enclosed structure (112).

4. The filter system (100) according to any of the preceding claims wherein the second filtration stage further comprises a mesh (602) configured to pre-filter the air flow that enters the filter bed (302)

5. The filter system (100) according to any of the preceding claims wherein a width of the first gap (312) is between a range of 1 and 3 meters.

6. The filter system (100) according to any of the preceding claims wherein a width of the second gap (314) is between a range of 2.5 and 5 meters.

7. The filter system (100) according to claim 1 wherein the plurality of air inlets (104) are elevated by at least 6 meters from the base (108) of the enclosed structure (112).

8. A method of operation of a filter system (100) according to claim 1 comprising;
circulating the air flow through a flow path (318) that includes the steps of:
ingesting the air flow into the plurality of elevated air inlets (104), impinging the air flow against the plurality of internal barrier walls (106), turning the air flow in the downward direction past the filter bed (302), pulling the air flow towards the center line (306) of the enclosed structure (112) and changing the direction of the air flow in the upward direction to flow through the filter bed (302),
wherein air borne particles are separated from the air flow within the flow path 318 and deposited on the base (108) of the enclosed structure (112).

9. The method of operation of a filter system (100) according to claim 8 comprising; configuring the enclosed structure (112) and filter bed (302) to operate as a DAC unit,
absorbing CO₂ from the air flow during an absorption cycle, desorbing and capturing CO₂ during a desorption cycle

10. The method of operation of a filter system (100) according to any of the preceding claims wherein an amount of CO₂ is captured from the air flow as it flows through a plurality of sorbent filters (502) during an absorption cycle, and the amount of CO₂ is extracted from the plurality of sorbent filters (502) during a desorption cycle.

11. A method of operation of a filter system (100) according to any of the preceding claims wherein a mesh (602) pre-filters the air flow prior to entering each of the plurality of sorbent filter (502) of each of a plurality of contactors (105).

12. A method of method of operation of a filter system (100) according to any of the preceding claims further comprising the step of cleaning the first filtration and second filtration stages during the desorption cycle.

13. A method of method of operation of a filter system (100) according to any of the preceding claims, wherein the filter bed further comprises a flow shield (402), and the flow shield (402) prevents the air flow from bypassing the plurality of contactors (105).

14. A method of method of operation of a filter system (100) according to any of the preceding claims wherein ground level particles are prevented from ingestion by elevating the plurality of air inlets (104) by at least 6 meters from the base (108) of the enclosed structure (112).
